# EUROPÄISCHE PATENTSCHRIFT

(11) **EP 3 002 650 B1**
(45) Veröffentlichungstag und Bekanntmachung des Hinweises auf die Patenterteilung: **10.03.2021**
(21) Anmeldenummer: 15186040.0
(22) Anmeldetag: 21.09.2015
(51) Int. Cl.: G05B 19/401, F16F 9/02, H01Q 13/10

(54) **VORRICHTUNG UND VERFAHREN ZUR SERIENMÄSSIGEN BEARBEITUNG UND/ODER HERSTELLUNG EINES WERKSTÜCKES**
DEVICE AND METHOD FOR MASS MACHINING AND/OR PRODUCTION OF A WORKPIECE
DISPOSITIF ET PROCÉDÉ DE TRAITEMENT ET/OU FABRICATION EN SÉRIE D'UNE PIÈCE À USINER

(30) Priorität: 30.09.2014 DE 102014114255
(43) Veröffentlichungstag der Anmeldung: 06.04.2016
(73) Patentinhaber: Fibro GmbH, 74855 Hassmersheim (DE)
(72) Erfinder: Reinmuth, Norbert, 74855 Neckarmuehlbach (DE)
(74) Vertreter: Staeger & Sperling Partnerschaftsgesellschaft mbB

(56) Entgegenhaltungen:
- EP-A1- 1 662 234
- WO-A1-2011/154372
- DE-A1-102007 034 416
- DE-A1-102008 045 476

## Beschreibung

Die Erfindung betrifft eine Vorrichtung zur (automatisierten) serienmäßigen Bearbeitung und/oder Herstellung eines Werkstückes sowie ein Verfahren zur Prozessüberwachung einer solchen Vorrichtung mit einem Werkzeug, bei dem wenigstens eine Prozessgröße überwacht werden soll. Ferner wird ein Verfahren offenbart, wie ein Werkzeug einer solchen Vorrichtung in vorteilhafter Weise bestückt werden kann.

Bei der serienmäßigen Herstellung und Bearbeitung von Werkstücken kommt es leider immer wieder vor, dass Werkzeuge, wie z. B. Umformwerkzeuge und Pressen, insbesondere deren technischen Einrichtungen zur Bearbeitung und/oder Umformung nicht bei den für den Prozess vorgegebenen und erforderlichen Betriebsbedingungen arbeiten, sondern aufgrund von unerwünschten Prozesseinflüssen außerhalb der erforderlichen Betriebsparameter betrieben werden, was zu fehlerhaften Produkten, Ausschuss und ggf. zu Werkzeugschäden führen kann. Dies ist umso mehr ein Problem, als komplexen Teile-Geometrien und damit komplexen Werkzeuge in der automatisierten Serienfertigung betroffen sind. Auch bei einem Werkstückwechsel treten Anforderungen auf, denen mit den im Stand der Technik bekannten Verfahren nur unzureichend begegnet wird.

Im Sinne der vorliegenden Erfindung unterscheidet sich die Terminologie "Serienfertigung" von der Terminologie "automatisierte Serienfertigung" darin, dass die "automatisierten Serienfertigung" nicht hauptsächlich auf die Stückzahl in Serie abstellt, sondern auch auf den Grad der Automatisierung infolge fest eingeprägter Betriebsparameter abstellt. Dies lässt sich an folgendem Beispiel erläutern. So lässt sich z. B. mit einer in der Drehzahl einstellbaren Handständerbohrmaschine durchaus eine Serienfertigung realisieren. Das Fertigungsergebnis ist aber abhängig von verschiedenen Parametern, die infolge des manuellen Eingriffs bestimmt oder jedenfalls erheblich mitbestimmt werden. Bei der "automatisierten Serienfertigung" z. B. bei einer Presse werden diese Einflussfaktoren dahingehend beseitigt, dass die das Fertigungsergebnis bestimmenden und beeinflussenden Prozessparameter wie z. B. die Bearbeitungsgeschwindigkeit, die Gleiteigenschaften, die Prozesstemperatur, der Prozessdruck und dergleichen festgelegt werden müssen und bei einem Werkstoff oder Werkstückwechsel entsprechend angepasst werden müssen. Nachteilig dabei ist, dass es zu Fehlern und Ausschuss kommt, wenn einer dieser Prozessparameter außerhalb eines Sollbereichs liegt. Beim Überwachen der Parameter treten wiederum eine Reihe weiterer Probleme auf, insbesondere, wenn die Messmittel an unzugänglichen Positionen platziert werden müssen, elektrische Zuleitungen nicht durch das Werkzeug verlegt werden können, drahtlose Signalübertragung aufgrund der großen metallischen Werkzeugflächen und der Gehäuse ausscheidet und auch eine komplexe Korrelation der Parameter zueinander existiert.

Betrachtet man zum Beispiel eine Gasdruckfeder zur Aufnahme von Hubbewegungen in einem Pressenwerkzeug oder in einer Umformvorrichtung, ist im Hinblick auf die Prozesssicherheit bereits bekannt, Messmittel an der Gasdruckfeder anzubringen, um die Gasdruckfeder in ihrem Betriebsverhalten zu überwachen (DE 10 2007 034416 A1). Bei dem Versuch die Messdaten drahtlos zu übertragen kommt es in der Praxis aber immer wieder vor, dass die umgebenden Metallteile und vor allen Dingen die Maschinen und Vorrichtungsgehäuse die Datenübertragung stören, ganz unterbinden oder jedenfalls nur schwache (kurzreichweitige) Signale erzeugen können. Dahingehend schweigt der einschlägige Stand der Technik, wie solche bekannte Lösungen auf einfache und kostengünstige Weise in eine, ein Gehäuse aufweisende Automatisierungsvorrichtung, Umformpresse oder dergleichen eingesetzt und auch dauerhaft über längere Zeit betrieben werden können und den Anforderungen wie Werkstückwechsel und Werkzeugwechsel gerecht werden. Auch die drahtlose Energieversorgung der Messmittel stellt ein Problem dar, da einerseits nicht erkannt werden kann, wie lange die Kapazität bei Verwendung von Batterien oder Akkus ausreicht und andererseits bei zu niedriger Spannung z. B. schwache oder gar keine Signale gesendet werden und demnach eine Abweichung eines Prozessparameters dann nicht mehr detektiert werden kann.

Ein weiteres Ziel der vorliegenden Erfindung ist die Null-Fehlerteil-Produktion. Eine häufige Ursache von Werkzeugausfall/Ausschussteilen ist unter anderem darin begründet, dass kein spontaner, sondern ein schleichender Druckverlust ursächlich für Fehlteile ist, der aber über längere Zeit vom Anwender nicht bemerkt wird.

Eine mögliche Voraussetzung für eine Null-Fehlerteil-Produktion wäre eine Echtzeit-Prozesskontrolle im Prozesswerk mit rechtzeitiger Fehlersignalisierung vor der Fehlteilproduktion. Hierzu gehört ergänzend eine frühzeitige Verschleißerkennung und eine gezielte Fehlersuche zur Vermeidung von Ausfallzeiten und Folgeschäden.

Es ist weiter von Nachteil, dass bei einigen zu überwachenden Werkzeugen mehrere komplex voneinander abhängige Prozessparameter getrennt überwacht werden, obschon jedoch eine (komplexe) Korrelation zwischen den Parametern besteht. Es hat sich demnach gezeigt, dass die herkömmlichen Verfahren z. B. bereits dann versagen, wenn ein zu überwachender Prozessparameter zwar gerade noch innerhalb eines Sollbereiches liegt, während ein zweiter (mit diesem in einer Korrelation stehender) zu überwachender Prozessparameter daraufhin aus dem Sollbereich herausläuft, weil eine dritte Einflussgröße die Veränderung des ersten Prozessparameters zeitlich langsamer beeinflusst, als die des zweiten überwachten Prozessparameters. Die Abweichung des zweiten Prozessparameters hat aber unter Umständen einen weit größeren Einfluss auf das Werkzeug oder das Ergebnis bzw. den Schaden als die des ersten Parameters. Diese Problematik ist im Stand der Technik ebenfalls unbefriedigend oder überhaupt nicht gelöst.

Aus EP 1 662 234 A1 ist eine gekapselte Sterilisationsvorrichtung offenbart, bei der Sensorwerte drahtlos übertragen werden.

Vor diesem Hintergrund ist es Aufgabe der vorliegenden Erfindung, vorbenannte Nachteile zu überwinden und eine Vorrichtung zur Bearbeitung und/oder Herstellung eines Werkstückes sowie ein Verfahren zur Prozessüberwachung einer solchen Vorrichtung bereitzustellen, die kostengünstig, sicher und auch dauerhaft über eine längere Zeit betrieben werden kann.

Diese Aufgabe wird gelöst mit einer Vorrichtung zur Bearbeitung und/oder Herstellung eines Werkstückes gemäß den Merkmalen von Anspruch 1 sowie einem Verfahren zur Prozessüberwachung einer solchen Vorrichtung mit den Merkmalen von Anspruch 10.

Grundgedanke der vorliegenden Erfindung ist es dabei eine Vorrichtung mit einem Werkzeug mit einem Messmittel mit vorzugsweise integriertem Transceiver oder alternativ einem Funksender zur drahtlose Übertragung von Prozessparametern oder denen zugeordneten korrespondierenden Messdaten vorzusehen und in der Vorrichtung geeignete Transmissionsöffnungen so vorzusehen, dass ein ungestörter d. h. insbesondere signalstarker Überwachungsbetrieb möglich ist.

Erfindungsgemäß wird demnach eine Vorrichtung zur serienmäßigen Bearbeitung und/oder Herstellung eines Werkstückes mit einem umfangsgeschlossenen Gehäuse, in dem wenigstens ein Werkzeug zur formenden Be- und/oder Verarbeitung des Werkstückes (von einem ersten Zustand in einen zweiten Zustand) angeordnet ist, vorgeschlagen, wobei wenigstens eine vorzugsweise zwei beim Be- oder Verarbeitungsvorgang zu überwachende physikalisch Prozessgrößen (P1, P2, P3) des Werkzeugs mittels wenigstens einem im oder am Werkzeug integrierten Messmittels überwacht werden, wobei ferner ein Transceiver vorgesehen ist, der ausgebildet ist Messdaten vom Messmittel zu empfangen, sowie die Messdaten drahtlos an eine externe (jedenfalls an eine räumlich außerhalb der Vorrichtung befindliche) Empfangseinrichtung durch wenigstens eine bestimmungsgemäß angeordnete und in der Form und Lage geeignet ausgebildete Transmissionsöffnung im Gehäuse zu senden. Vorzugsweise können auch zwei oder mehrere solcher (d. h. gleichartiger) Transmissionsöffnungen vorgesehen werden.

In einer bevorzugten Ausführungsform der Erfindung wird eine Vorrichtung vorgeschlagen, bei der das Gehäuse als ein geschirmtes Gehäuse, vorzugsweise als ein metallisches Gehäuse ausgebildet ist.

Die zuvor angegebenen bestimmungsgemäß angeordneten Transmissionsöffnungen im Gehäuse sind mit Vorteil jeweils als rechteckiger Schlitz mit einer Schlitzbreite von 4 bis 15 mm, vorzugsweise von 4 bis 10 mm und besonders bevorzugt mit einer Schlitzbreite von 5 bis 8 mm ausgebildet, wobei die Höhe des Schlitzes mindestens der sechsfachen Länge (6-fachen) der jeweiligen Schlitzbreite entspricht. Es hat sich ferner gezeigt, dass auch die Deckenhöhe und damit der umgebende Übertragungsraum der installierten Vorrichtung einen Einfluss hat. Bei hohen Decken von mehr als 10 Meter bis etwa 20 Meter-Abstand zum Boden muss das Gehäuse eine etwas größere Schlitzbreite von 8 - 12mm aufweisen mit einer Schlitzhöhe von etwa 60mm. Bei einer Deckenhöhe von weniger als 10 Metern reicht eine geringere Transmissionsöffnung von etwa 5mm X 40mm aus, um eine zuverlässige Datenübertragung zu gewährleisten.

In einer weiter vorteilhaften Ausführungsform der vorliegenden Erfindung ist die Vorrichtung dadurch charakterisiert, dass mehrere Messmittel als Teil eines PAN (Personal Area Network) ausgebildet sind.

Es ist weiter mit Vorteil vorgesehen, die vorliegende Erfindung bei einer Vorrichtung vorzusehen, bei der die Vorrichtung ein Press-, Umform-, Stanz-, Schnitt-, Spritzguss- und/oder Metallbiegewerkzeuge umfasst und wobei ferner ein Werkzeug als wenigstens eine autarke hydropneumatische Komponente ausgebildet ist. Als autarke hydropneumatische Komponente kann z. B. eine Gasdruckfeder mit integriertem Messmittel vorgesehen werden, wobei das Messmittel energieautark betrieben werden kann, ohne dass es elektrischer Zuleitungen zur Energieversorgung des Messmittels bedarf.

Es ist weiter mit Vorteil vorgesehen, wenn die Vorrichtung ferner eine elektronische Vorrichtungssteuerung und eine Koordinierungseinrichtung aufweist und die Messmittel als in wenigstens einem einstellbaren Parameter parametrisierbare Messmittel darstellen, wobei die Koordinierungseinrichtung ferner ein Kommunikationsmodul zur Kommunikation der Messmittel über die Transceiver mit der Vorrichtungssteuerung und ferner ein Modul zur Einrichtung und Parametrierung der Messmittel aufweist. Das Modul zur Einrichtung und Parametrisierung der Messmittel kann z. B. als Eingabe- und Verarbeitungsmodul ausgebildet sein, um das Messmittel bei der erstmaligen Kalibrierung oder bei der Anpassung auf die jeweilige Vorrichtung im Hinblick auf seine Betriebsparameterschwellenwerte und/oder Sollwerte zu parametrieren. Auf diese Weise wird eine universelle Verwendung z. B. einer erfindungsgemäß so konfigurierten Gasdruckfeder mit einem integrierten Transceiver bereitgestellt, welcher je nach Verwendung in der erfindungsgemäßen Vorrichtung auf die Verarbeitungsaufgabe eingestellt werden kann.

Wie bereits zuvor erläutert ist es vorteilhaft, die Messmittel selbst über eine netzunabhängige, autarke Energieversorgung mit Energie zu versorgen. Somit kann eine besonders kompakte Bauweise erzielt werden und insbesondere bedarf es keiner Zuführungen von Kabel und Drähten von einer externen Energiequelle zu den Messmitteln.

Es kann mit Vorteil weiter vorgesehen sein, dass ein Softwaremodul mit individuell programmierbarer Software vorgesehen wird, um das Auslesen der Daten zu steuern. Das Softwaremodul wertet die Daten aus und leitet entsprechende Maßnahmen zur Prozesssteuerung und vorbeugenden Instandhaltung ein. Das Softwaremodul bietet ferner die Möglichkeit, Alarmgrenzen zu setzen, Referenzpunkte wie z. B. Nullpunkte zu finden und eine Vorauswahl der Sensorposition eines Messmittels zu treffen.

Als eine weiter vorteilhafte Ausführungsform der vorliegenden Erfindung sind die Messmittel als in ihrem Sendeintervall parametrierbare Messmittel ausgebildet, um die Sendeintervalle und/oder eine gewünschte Sendeintervalldauer einstellen zu können. Dies ist besonders vorteilhaft, um insbesondere die Lebensdauer der Vorrichtung und damit die unterbrechungsfreie Überwachung der Messmittel zu verlängern, da durch einen Intervallbetrieb sichergestellt wird, dass die Messmittel nur unter gewissen Betriebsbedingungen erhaltene Messdaten auswerten und ggf. über den ebenfalls integrierten Transceiver oder die integrierte Sendeantenne an eine externe Empfangsstation senden. Es kann in einer besonders vorteilhaften Ausführungsform der vorliegenden Erfindung vorgesehen werden, dass die Sendeintervalldauer für unterschiedliche Prozessbedingungen unterschiedlich eingestellt werden kann, so dass bei mangelnder Abweichung von idealen Sollwerten das Sendeintervall zeitlich immer größer wird und insofern sichergestellt wird, dass die netzunabhängige Energieversorgung für einen deutlich längeren Zeitraum bereitsteht.

Es ist weiter mit Vorteil vorgesehen, wenn die Messmittel ein Aktivierungs- und Deaktivierungsmodul aufweisen, das abhängig von einem einstellbaren Schwellenwert die Aktivierung bzw. Deaktivierung und/oder das Senden der jeweiligen Messdaten steuern.

Ein weiterer Aspekt der vorliegenden Erfindung betrifft ein Verfahren zur Prozessüberwachung von physikalischen Sollwerten einer wie zuvor beschriebenen Vorrichtung mit wenigstens den folgenden Schritten:
a) Definieren von Schwellenwerten (Ts, Ps) der zu überwachenden physikalischen Prozessgrößen wenigstens eines Werkzeuges zum Erzeugen eines Steuersignals bei Über- oder Unterschreiten der dem Werkzeug zugeordneten Schwellenwerten;
b) Parametrieren der Messmittel zur Sollwertüberwachung in Abhängigkeit von bauartbedingten Druck-Temperatur-Schwankungs-breiten des zu überwachenden Werkzeugs;
c) Überwachen mindestens der physikalischen Prozessgrößen Prozessdruck P und Temperatur T mittels der Messmittel des Werkzeugs,
d) Drahtlose Datenübertragung der den Prozessgrößen zugeordneten Messdaten mittels einem Transceiver des entsprechenden Messmittels an eine Koordinierungseinrichtung,
e) Erzeugen eines Steuersignals aus den Messdaten zum Steuern des Betriebszustandes des Werkzeugs, wobei der Betriebszustand des dem Messwert der überwachten Prozessgröße zugeordneten Werkzeugs bei Überschreiten oder Unterschreiten des betreffenden Schwellenwertes verändert oder inaktiv geschaltet wird oder ein Warnsignal und ggf. ein Alarmsignal sendet.

Vorteilhaft ist es, wenn die Parametrierung in Schritt a) dergestalt erfolgt, dass eine Temperaturerhöhung ΔTₖ über einen definierten Schwellwert Ts zeitlich vor einem Druckabfall ΔPₖ unter den Schwellwert Ps detektiert wird und demnach eine Signalerzeugung oder ein Warnsignal in Schritt e) zeitlich vor einem den Schwellwert Ps unterschreitenden Druckabfall erfolgt.

In einer besonders vorteilhaften Ausbildung der Erfindung erfolgt gezielt ein Intervallmessverfahren bei dem die Datenübertragung und/oder das Erzeugen eines Steuersignals aus den Messdaten im Intervallbetrieb anstelle der kontinuierlichen Datenübertragung erfolgt.

Mit Vorteil wird ferner das Verfahren mit einem Multimodensensor betrieben. Der Multimodensensor hat mehrere (vorzugsweise 3 oder 4) verschiedene Modi. Der erste Modi (Konfigurations- Modus) beschreibt den Zustand nach dem Einschalten. Der Multimodensensor hat noch keine Einstellungen und Parameter für den Fertigungsprozess. In diesem Zustand werden von der Koordinierungseinrichtung dem Multimodensensor alle notwendigen Parameter und Informationen übermittelt. Anschließend wechselt der Multimodensensor in den zweiten Modi, dem sogenannten Sleep-Modus. In einem weiteren Modus (Arbeitsmodus) sendet und misst der Multimodensensor die Sensordaten zyklisch zu definierten Zykluszeiten. Es gibt innerhalb des Arbeitsmodus ferner einen Werkzeugeinstellmodus des Werkzeuges (wie z. B. das Befüllen einer Gasdruckfeder), der es ermöglicht, das Einrichten des Werkzeuges (z. B. das Befüllen einer Gasdruckfeder) zu überwachen. Hierzu wird der Senderhythmus entsprechend verkürzt. Kann der Sensor seine ermittelten Messdaten nicht innerhalb einer einstellbaren Zeitspanne loswerden, geht der Sensor wieder in den Sleep-Modus.

Es ist im Verfahren ferner vorgesehen die Spannung der Energieversorgung kontinuierlich oder noch vorteilhafter ebenfalls im Intervallbetrieb zu überwachen. Dabei kann die Intervallabfragezeit d. h. der Sendezyklus verkürzt werden, wenn sich die Spannung unterhalb eines bestimmten Schwellenwertes befindet. Bei jedem erneuten Aktivieren der Sensoren werden sowohl die aktive Zeit als auch die Sleep-Zeit in einem Datenspeicher abgelegt. Daraus kann dann eine Prognose (Hochrechnung) ermittelt werden, wann ein Wechsel der autarken Energieversorgung erforderlich sein wird. Es ist weiter erfindungsgemäß vorgesehen, dass bei Störung oder Unterbrechung der Datenübertragung in oben genanntem Schritt d) der Schritt e) trotzdem ungestört erfolgt.

In einer besonders vorteilhaften Ausführung werden Datenpakete aus mehreren Informationen gebildet, die Daten zu aktuellen Prozessdaten wie z. B. Druck und Temperatur, einen Nachrichten-Zähler, der von 0 bis 255 durchzählt, die jeweils zuletzt gemessene Batteriespannung und die Sensor-Identifikation enthalten.

Im Messmittel werden Schwellenwerte für die Signale *"Warnung"* und *"Alarm"* definiert. Somit werden zwei Zustände mittels Signalen dargestellt. Diese Schwellenwerte sind individuell einstellbar und werden bevorzugt ebenfalls von der Koordinierungseinrichtung dem Messmittel eingeprägt. Bei Unterschreitung eines Schwellenwertes nimmt dies ebenfalls Einfluss auf das Sendeverhalten. Je nach Schwellenwert verkürzen sich die Sendeintervalle, welche ebenfalls einstellbar sind. Ferner weist die Vorrichtung einen Datenspeicher auf, der die Signale "Warnung" und "Alarm", die zuvor aufgetreten waren abspeichert und diese über eine Anfrage durch die Koordinierungseinrichtung später abrufbar sind. Dabei wird immer der nachteiligste Zustand dargestellt, denn ein Status "Alarm" setzt einen Status "Warnung" voraus.

Der Koordinator wird mit Vorteil mit einer Standardschnittstelle z. B. als USB oder Micro-USB Schnittstelle ausgestattet, um diesen an einer Arbeitsstation mit USB- Steckverbinder anschließen zu können. Der Koordinator stellt demnach die Schnittstelle zwischen Funkkommunikation und Bedienersoftware her. Mit Vorteil wird der Koordinator mit einer Standardfirmware wie z. B. ZigBee betrieben.

Ein weiterer Vorteil der vorliegenden Erfindung liegt in der Anwendung bei der Werkzeugbestückung. Wird ein Werkzeug neu bestückt, richtet das Softwaremodul ein Konfigurations-PAN ein, an dem sich alle Sensoren, die keine Einstellungen besitzen anmelden. Meldet sich ein Werkzeugmessmittel, werden ihm alle Funktionsparameter inklusive des Werkzeug-PAN übergeben. Danach erfolgt eine Druckabfrage des aktuellen Drucks. Entspricht der Druck nicht dem Sollwert, so kann das Messmittel wie oben beschrieben in den Werkzeugeinstellmodus (z. B. den Befüllungsmodus) überführt werden. Gleichzeitig werden aus dem Sensor die Druckwerte ausgelesen. Das Messmittel sendet jedoch nicht. Sobald alle Sensoren eingebunden, positioniert und befüllt sind, werden diese in den Sleep-Mode übergehen. Die Werkzeug und Sensordaten werden in einem Datenfile abgelegt und an die jeweilige Koordinierungseinrichtung übertragen.

Eine besonders geeignete Anwendung der vorliegenden Erfindung stellt es dar, wenn das beschriebene Verfahren bei einer Vorrichtung verwendet wird, bei der wenigstens ein Werkzeug ein hydropneumatisches Verstellelement, insbesondere eine einzelne oder mehrere parallel angesteuerte Gasdruckfeder(n) ist bzw. sind und wenigstens zwei in Korrelation stehende Prozessparameter auf diese Weise überwacht werden sollen, wobei ferner die Einrichtung mittels des Multimodenmessmittels benutzergeführt erfolgt.

Andere vorteilhafte Weiterbildungen der Erfindung sind in den Unteransprüchen gekennzeichnet bzw. werden nachstehend zusammen mit der Beschreibung der bevorzugten Ausführungsformen der Erfindung anhand der Figuren näher erläutert.

Es zeigen:
- Fig. 1: eine schematische Ansicht einer erfindungsgemäßen Vorrichtung;
- Fig. 2: ein Flussdiagramm zur Erläuterung eines Verfahrens zur Prozessüberwachung von physikalischen Sollwerten mit einer Vorrichtung gemäß Fig. 1, und
- Fig. 3: ein Flussdiagramm, welches das Einrichten eines PAN Netzwerks verdeutlicht sowie
- Fig. 4: ein Flussdiagramm zum Ablauf der Werkzeugeinrichtung.

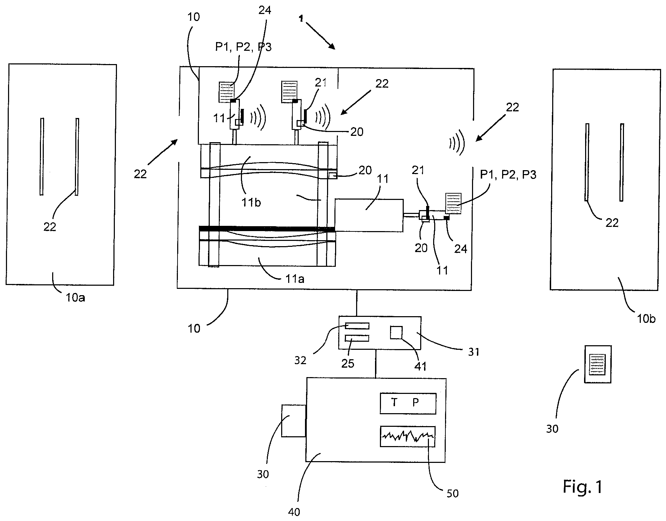

In der Fig. 1 wird beispielhaft und in schematischer Darstellung eine Vorrichtung 1 gemäß einem Ausführungsbeispiel der vorliegenden Erfindung dargestellt.

Die Vorrichtung 1 ist ausgebildet zur serienmäßigen Bearbeitung und Herstellung eines Werkstücks 2. Die Vorrichtung 1 zeigt ferner ein umfanggeschlossenes Gehäuse 10, wobei in dem Gehäuse 10 ein Werkzeug 11 angeordnet ist, wobei das Gehäuse 10 wiederum ein weiteres umfangsgeschlossenes und Werkzeuge 11 aufweisendes Gehäuse 10 aufweist. Das Werkzeug 11 dient zur formenden Be- und Verarbeitung des Werkstücks 2, welches auf dem Werkzeugunterteil 11a angeordnet ist, welches dem Werkzeugoberteil 11b gegenüberliegend in der Vorrichtung 1 untergebracht ist. Es ist ferner erkennbar, dass das Werkzeug 11 bestehend aus Werkzeugunterteil 11a und Werkzeugoberteil 11b von zwei weiteren Werkzeugen 11 betätigt werden kann. Die beiden zuvor genannten Werkzeuge 11 sind lediglich beispielhaft oberhalb des Werkzeugteils 11b angeordnet. In alternativen Ausführungsformen kann die Kombination der einzelnen Werkzeuge 11 in geeigneter Weise und Anordnung vorgesehen sein.

Rechts in der Figur 1 neben dem Werkzeugunterteils 11a des genannten Werkzeugs 11, befindet sich zwei weitere Werkzeuge 11. Die beiden oberhalb des Werkzeugoberteils 11b gezeigten Werkzeuge 11 sowie das ganz rechts gezeigte Werkzeug 11 sind vorliegend als Gasdruckfedern ausgebildet, zur Betätigung des jeweils mit diesen gekoppelten weiteren Werkzeugen 11.

Die Werkzeuge 11 sind mit Messmittel 20 zum Überwachen von Prozessgrößen P1, P2, P3 ausgestattet. Es ist ferner jeweils ein Transceiver 21 an einzelnen Messmitteln 20 vorgesehen. Die Transceiver 21 können in einer alternativen Ausführungsform zusätzlich mit einer Schnittstelle zur Anbringung eines Moduls 32 zur Einrichtung oder Parametrieren der Messmittel 20 verwendet werden, um ggf. die Messmittel 20 beim Einbau der Werkzeuge 11 oder bei der neuen Werkzeugbestückung der Werkzeuge in der Vorrichtung 1 zu parametrieren.

Das Gehäuse 10 ist als ein metallisches Gehäuse um die Werkzeuge 11 herum ausgebildet. Die beiden links und rechts dargestellten Gehäusewände 10a und 10b stellen die jeweiligen Seitenansichten von links und rechts auf die Vorrichtung 1 dar. In den Gehäuseseitenwänden 10a, 10b d. h. im Gehäuse 10 befinden sich gemäß der vorliegenden Ausführungsform der Erfindung vier Transmissionsöffnungen 22, die als rechteckige Schlitze mit einer Schlitzbereite von 5 mm und einer Schlitzhöhe von 50 mm ausgebildet sind. Die mehreren Messmittel 20 sind als Teil eines Privat Area Networks (PAN) ausgebildet und gemeinsam in diesem Netzwerk konfiguriert. Das zentral dargestellte Werkzeug 11 mit Werkzeugunterteil 11a und Oberteilen 11b stellt im vorliegenden Beispiel ein Pressen- und Umformwerkzeug dar, um das Werkstück 2 von einem ersten Zustand in einen zweiten Zustand umzuformen. Durch die zuvor genannten Transmissionsöffnungen 22 können Sendesignale der Transceiver 21 hindurch zu einer oder mehreren Empfangseinrichtungen 30 nahezu ungestört gesendet werden.

Das geschirmte Gehäuse 10 dient insbesondere auch zur Reduktion und Schirmung gegen externe Störquellen wie z. B. Störquellen, die durch Lichtbogenschweißgeräte, Punktschweißgeräte, Frequenzumrichter, FID Module, Schaltnetzgeräte, Antriebe oder andere Induktionsvorrichtungen im Umfeld der Vorrichtung betrieben werden.

Es hat sich allerdings gezeigt, dass die Transmissionsöffnungen 22 nur minimal Störsignale von Störquellen insbesondere in ausreichendem Abstand hindurchlassen, so dass zwar bestimmungsgemäß Sendesignale aus dem Gehäuse 10 heraus gesendet werden können, allerdings nahezu keine Störsignale den Betrieb der Messmittel 20 stören.

Wie in der Fig. 1 weiter ersichtlich, umfasst diese eine elektronische Vorrichtungssteuerung 40 sowie eine Koordinierungseinrichtung 31. Allgemein ausgedrückt kann die Vorrichtung daher in vier Haupt-Komponenten kategorisiert werden. Eine erste Komponentengruppe stellen die Messmittel und Sensoren im Werkzeug 11 dar, wobei diese mit Vorteil ein PAN (Personal Area Network) bilden. Die zweite Komponente betrifft den Empfänger/Koordinator, welches ein Gerät zur Einrichtung des PAN und zur Parametrierung der Sensoren darstellt. Als weitere Komponente wird ein sog. Werkzeugkoordinator (COO) d. h. die Koordinierungseinrichtung 31 bereitgestellt, die vorteilhaft benachbart zu den Werkzeugsensoren, beispielsweise am Werkzeug 11 angeordnet ist und ferner mit der Vorrichtungssteuerung 40 kommuniziert. Die Vorrichtungssteuerung 40 stellt insofern eine weitere Hauptkomponente des vorliegenden Ausführungsbeispiels dar.

Die Messmittel 20 sind als in wenigstens einem einstellbaren Parameter parametrierbare Messmittel 20, wobei die Koordinierungseinrichtung 31 ferner ein Kommunikationsmodul 25 zur Kommunikation mit den Messmitteln 20 über die Transceiver 21 verfügt, sowie zur Kommunikation über die Transceiver mit der Vorrichtungssteuerung 40 und ferner ein Modul 32 aufweist zur Einrichtung der Parametrierung der Messmittel 20. Dargestellt ist ferner das zuvor beschriebene Softwaremodul 41.

Wie weiter in der Fig. 1 dargestellt ist, verfügen die Messmittel 20 über eine netzunabhängige autarke Energieversorgung 24. In dem vorliegenden Ausführungsbeispiel sind die Messmittel 20 als in ihrem Sendeintervall T parametrierbare Messmittel ausgebildet, und zwar um die Sendeintervalle bzw. eine gewünschte Sendeintervalldauer einstellen zu können. Dies bedeutet, dass die netzunabhängige autarke Energieversorgung 24 nicht ständig belastet wird, sondern lediglich nur für kurze Sendeintervallzeiten, bei denen der Transceiver 21 des jeweiligen Messmittels 20 Signale an die Empfangseinrichtung 30 sendet. Die Messmittel 20 weisen ferner Aktivierungs- und Deaktivierungsmodule auf, die in der Fig. 1 allerdings nicht besonders dargestellt sind, da diese Aktivierungs- und Deaktivierungsmodule im Messmittel 20 integriert sind.

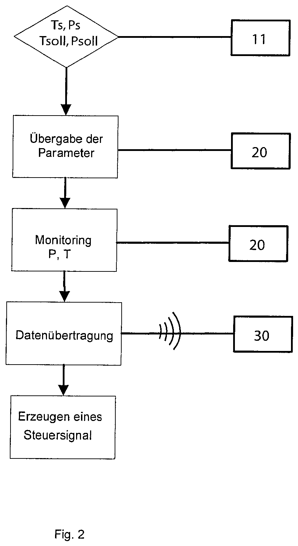

In Figur 2 ist ein Flussdiagramm zur Erläuterung eines Verfahrens zur Prozessüberwachung von physikalischen Sollwerten mit einer Vorrichtung gemäß Figur 1 schematisch dargestellt. Definieren von Schwellenwerten Ts, Ps der zu überwachenden physikalischen Prozessgrößen (Sollwerte T_{SOLL}, P_{SOLL}) der Gasdruckfedern 11 zum Erzeugen eines Steuersignals bei Über- oder Unterschreiten der der jeweiligen Gasdruckfeder 11 zugeordneten Schwellenwerten Ts, Ps mit den folgenden Schritten:
a) Parametrieren der Messmittel 20 zur Sollwertüberwachung in Abhängigkeit von bauartbedingten Druck-Temperatur-Schwankungsbreiten der zu überwachenden Gasdruckfeder 11;
b) Überwachen mindestens der physikalischen Prozessgrößen Prozessdruck P und Temperatur T mittels der Messmittel 20 des Werkzeugs 11,
c) Drahtlose Datenübertragung der den Prozessgrößen zugeordneten Messdaten mittels einem Transceiver 21 des entsprechenden Messmittels 20 an eine Koordinierungseinrichtung 31,
d) Erzeugen eines Steuersignals aus den Messdaten zum Steuern des Betriebszustandes des Werkzeugs 11, wobei der Betriebszustand des dem Messwert der überwachten Prozessgröße zugeordneten Werkzeugs 11 bei Überschreiten oder Unterschreiten des betreffenden Schwellenwertes Ts, Ps verändert oder inaktiv geschaltet wird.

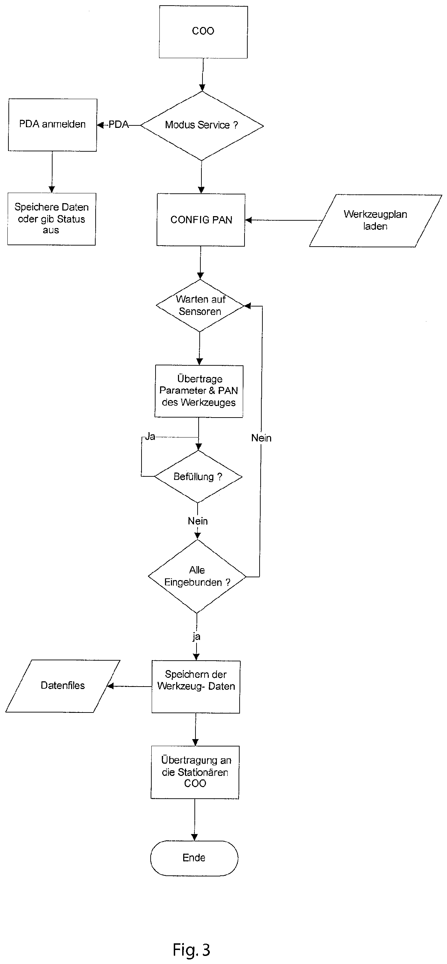

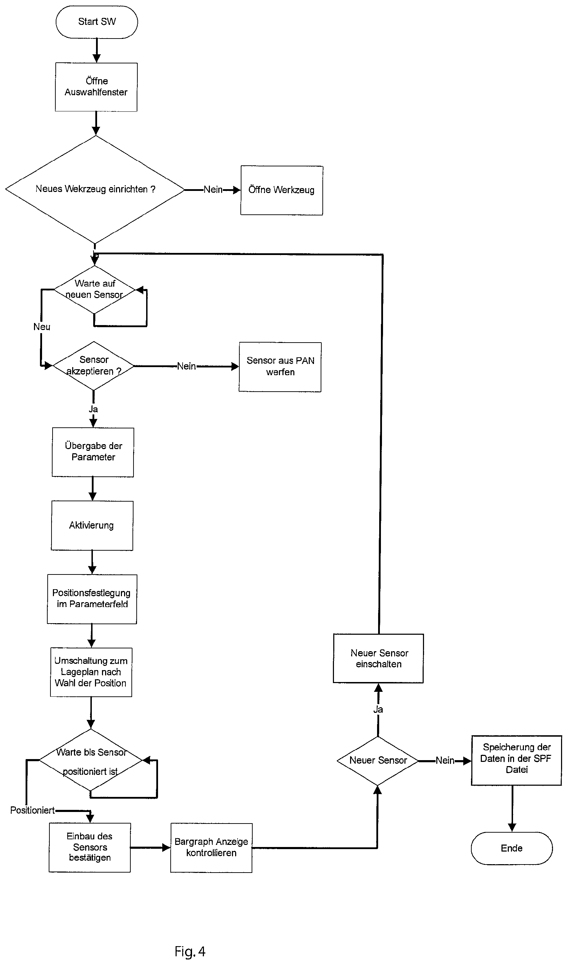

Die Figur 3 zeigt ein Flussdiagramm, welches das Einrichten eines PAN Netzwerks verdeutlicht. Es wird hierzu ein PAD Handheld verwendet. Wird ein Werkzeug 11 neu bestückt, richtet das Softwaremodul ein Konfigurations-PAN ein, an dem sich alle Sensoren 20, die keine Einstellungen besitzen anmelden. Meldet sich das Messmittel 20, werden ihm alle Funktionsparameter inkl. des Werkzeug- PAN übergeben. Der aktuelle Druck wird danach abgefragt. Sollte dieser nicht ausreichend sein so kann das Messmittel 20 in den entsprechenden auswählbaren Werkzeugeinstellmodus überführt werden. Ist z. B. eine Befüllung einer Gasdruckfeder nicht erforderlich, so wird geprüft, ob alle Sensoren eingebunden, positioniert und befüllt sind. Danach werden diese in den Sleep- Modus wechseln. Die Werkzeug- und Sensordaten werden in einem Datenfile abgelegt und an die stationäre Koordinierungseinrichtung 31 übertragen. Die Figur 4 zeigt ein Flussdiagramm zum Ablauf der Werkzeugeinrichtung.

## Patentansprüche

1. Vorrichtung (1) zur serienmäßigen Bearbeitung und/oder Herstellung eines Werkstückes (2) mit einem umfangsgeschlossenen Gehäuse (10) in dem wenigstens ein Werkzeug (11) zur formenden Be- und/oder Verarbeitung des Werkstückes (2) von einem ersten Zustand in einen zweiten Zustand angeordnet ist, wobei im oder am Werkzeug (2) ein Messmittel (20) integriert ist, das dazu ausgebildet ist, eine beim Be- oder Verarbeitungsvorgang zu überwachende physikalische Prozessgröße (P1, P2, P3) des Werkzeugs (11) zu überwachen, wobei ferner ein Transceiver (21) innerhalb des umfangsgeschlossenen Gehäuses (10) vorgesehen ist, der ausgebildet ist Messdaten vom Messmittel zu empfangen, sowie die Messdaten drahtlos an eine externe Empfangseinrichtung (30) durch eine bestimmungsgemäß angeordnete und ausgebildete Transmissionsöffnung (22) im umfangsgeschlossenen Gehäuse (10) zu senden.

2. Vorrichtung (1) nach Anspruch 1, **dadurch gekennzeichnet, dass** das Gehäuse (10) als ein geschirmtes Gehäuse, vorzugsweise ein metallisches Gehäuse ausgebildet ist.

3. Vorrichtung (1) nach Anspruch 1 oder 2, **dadurch gekennzeichnet, dass** die Transmissionsöffnung (22) als ein rechteckiger Schlitz mit einer Schlitzbreite von 4 - 15 mm, vorzugsweise von 4 - 10 mm und besonders bevorzugt von 5 - 8 mm ausgebildet ist und wobei die Höhe des Schlitzes mindestens der 6-fachen Länge der jeweiligen Schlitzbreite entspricht.

4. Vorrichtung (1) nach einem der vorhergehenden Ansprüche, **dadurch gekennzeichnet, dass** mehrere Messmittel (20) als Teil eines PAN ausgebildet sind.

5. Vorrichtung (1) nach einem der vorhergehenden Ansprüche, **dadurch gekennzeichnet, dass** die Vorrichtung (1) ferner ein Press-, Umform-, Stanz-, Schnitt-, Spritzguss- und/oder Metallbiegewerkzeug umfasst und das Werkzeug (11) als wenigstens eine autarke hydropneumatische Komponente ausgebildet ist.

6. Vorrichtung (1) nach einem der vorhergehenden Ansprüche, **dadurch gekennzeichnet, dass** die Vorrichtung (1) ferner eine elektronische Vorrichtungssteuerung (40) und eine Koordinierungseinrichtung (31) aufweist und die Messmittel (20) als in wenigstens einem einstellbaren Parameter parametrierbare Messmittel (20) ausgebildet sind, wobei die Koordinierungseinrichtung (31) ferner ein Kommunikationsmodul (25) zur Kommunikation der Messmittel (20) über die Transceiver (21) mit der Vorrichtungssteuerung (40) und ferner ein Modul (32) zur Einrichtung und Parametrierung der Messmittel (20) aufweist.

7. Vorrichtung (1) nach einem der vorhergehenden Ansprüche, **dadurch gekennzeichnet, dass** die Messmittel (20) über eine netzunabhängige, autarke Energieversorgung (24) verfügen.

8. Vorrichtung (1) nach einem der vorhergehenden Ansprüche, **dadurch gekennzeichnet, dass** die Messmittel (20) als in ihrem Sendeintervall (T) parametrierbare Messmittel ausgebildet sind, um die Sendeintervalle und/oder eine gewünschte Sendeintervalldauer einstellen zu können.

9. Vorrichtung (1) nach Anspruch 8, **dadurch gekennzeichnet, dass** das Messmittel (20) ferner ein Aktivierungs- und Deaktivierungsmodul aufweist, das abhängig von einem einstellbaren Schwellenwert (S) die Aktivierung bzw. Deaktivierung und/oder das Senden der jeweils ermittelten Messdaten steuert.

10. Verfahren zur Prozessüberwachung von physikalischen Sollwerten einer Vorrichtung (1) gemäß einem der Ansprüche 1 - 10 mit den wenigstens folgenden Schritten:
a) Definieren von Schwellenwerten (Ts, Ps) der zu überwachenden physikalischen Prozessgrößen wenigstens eines Werkzeuges (11) zum Erzeugen eines Steuersignals bei Über- oder Unterschreiten der dem Werkzeug (11) zugeordneten Schwellenwerte (Ts, Ps);
b) Parametrieren der Messmittel (20) zur Sollwertüberwachung in Abhängigkeit von bauartbedingten Druck-Temperatur-Schwankungs-breiten des zu überwachenden Werkzeugs (11);
c) Überwachen mindestens der physikalischen Prozessgrößen Prozessdruck P und Temperatur T mittels der Messmittel (20) des Werkzeugs (11),
d) Drahtlose Datenübertragung der den Prozessgrößen zugeordneten Messdaten mittels einem Transceiver (21) des entsprechenden Messmittels (20) an eine Koordinierungseinrichtung (31),
e) Erzeugen eines Steuersignals aus den Messdaten zum Steuern des Betriebszustandes des Werkzeugs (11), wobei der Betriebszustand des dem Messwert der überwachten Prozessgröße zugeordneten Werkzeugs (11) bei Überschreiten oder Unterschreiten des betreffenden Schwellenwertes (Ts, Ps) verändert oder inaktiv geschaltet wird.

11. Verfahren nach Anspruch 10, **dadurch gekennzeichnet, dass** die Parametrierung der Messmittel (20) in Schritt b) dergestalt erfolgt, dass eine Temperaturerhöhung ΔTₖ über einen definierten Schwellwert (Ts) zeitlich vor einem Druckabfall ΔPₖ unter den Schwellwert (Ps) detektiert wird und demnach eine Signalerzeugung in Schritt e) zeitlich vor einem den Schwellwert (Ps) unterschreitenden Druckabfall erfolgt.

12. Verfahren nach Anspruch 10 oder 11, **dadurch gekennzeichnet, dass** das Verfahren als Intervallmessverfahren betrieben wird und insbesondere der Intervallbetrieb bei den Schritten c) und/oder d) erfolgt.

13. Verfahren nach einem der Ansprüche 10 bis 12, **dadurch gekennzeichnet, dass** die Spannung der Energieversorgung (24) kontinuierlich oder im Intervallbetrieb überwacht wird.

14. Verfahren nach einem der Ansprüche 10 bis 13, **dadurch gekennzeichnet, dass** ferner bei Störung oder Unterbrechung der Datenübertragung in Schritt d) der Schritt e) ungestört erfolgt.

15. Verfahren nach einem der Ansprüche 10 - 14 mit einer Vorrichtung nach einem der Ansprüche 1 bis 9, wobei wenigstens ein Werkzeug ein hydropneumatisches Verstellelement, insbesondere eine einzelne oder mehrere parallel angesteuerte Gasdruckfeder(n) ist bzw. sind.

## Claims

1. A device (1) for mass machining and/or production of a workpiece (2) with a circumferentially closed housing (10) in the at least one tool (11) for forming machining and/or processing of the workpiece (2) from a first state into a second state, wherein, in or on the tool (2), a measuring means (20) is integrated, which is designed to monitor the physical process variables (P1, P2, P3) of the tool (11) to be monitored during the machining and/or processing process, wherein furthermore a transceiver (21) is provided within the circumferentially closed housing (10), which is designed to receive measurement data from measuring means and to transmit the measurement data wirelessly to an external receiving device (30) through a transmission opening (22) properly arranged and designed according to the requirements in the circumferentially closed housing (10).

2. The device (1) according to claim 1, **characterised in that** the housing (10) is designed as a shielded housing, preferably a metallic housing.

3. The device (1) according to claim 1 or 2, **characterised in that** the transmission opening (22) is designed as a rectangular slot with a slot width of 4-15 mm, preferably 4-10 mm and particularly preferably 5-8 mm and wherein the height of the slot corresponds to at least 6 times the length of the respective slot width.

4. The device (1) according to any one of the preceding claims, **characterised in that** the multiple measuring means (20) are designed as part of a PAN.

5. The device (1) according to any one of the preceding claims, **characterised in that** the device (1) furthermore comprises a pressing, forming, punching, cutting, injection moulding and/or metal bending tool, and the tool (11) is designed as at least one autonomous hydropneumatic component.

6. The device (1) according to any one of the preceding claims, **characterised in that** the device (1) furthermore comprises an electronic device controller (40) and a coordination device (31), and the measuring means (20) is designed as a measuring means (20) which can be parameterised in terms of at least one settable parameter, wherein the coordination device (31) furthermore comprises a communication module (25) for communication of the measuring means (20) via the transceivers (21) with the device controller (40) and furthermore comprises a module (32) for setting up and parameterising the measuring means (20).

7. The device (1) according to any one of the preceding claims, **characterised in that** the measuring means (20) have a network-independent autonomous energy supply (24).

8. The device (1) according to any one of the preceding claims, **characterised in that** the measuring means (20) are designed as a measuring means which can be parameterised in terms of its transmission interval (T) in order to be able to set the transmission intervals and/or a desired transmission interval duration.

9. The device (1) according to claim 8, **characterised in that** the measuring means (20) furthermore comprises an activation and deactivation module which controls the activation or deactivation and/or the transmission of the respectively determined measurement data as a function of a settable threshold value (S).

10. A method for process monitoring of physical target values of a device (1) according to any one of claims 1 to 10, having at least the following steps:
a) defining threshold values (Ts, Ps) of the physical process variables to be monitored of at least one tool (11) in order to generate a control signal when the threshold values (Ts, Ps) associated with the tool (11) are exceeded or not reached;
b) parameterising the measuring means (20) for the target value monitoring as a function of design-related pressure-temperature fluctuation ranges of the tool (11) to be monitored;
c) monitoring at least the physical process variables process pressure P and temperature T by means of the measuring means (20) of the tool (11),
d) wireless data transmission of the measurement data associated with the process variables by means of a transceiver (21) of the corresponding measuring means (20) to a coordination device (31),
e) generating a control signal from the measurement data in order to control the operating state of the tool (11), wherein the operating state of the tool (11) associated with the measurement value of the monitored process variable is changed or switched to inactive when the respective threshold value (Ts, Ps) is exceeded or not reached.

11. The method according to claim 10, **characterised in that** the parameterisation of the measuring means (20) in step b) occurs in such a manner that a temperature increase ΔTₖ above a defined threshold value (Ts) is detected temporally before a pressure drop ΔPₖ below the threshold value (Ps), and accordingly a signal generation in step e) occurs temporally before a pressure drop which does not reach the threshold value (Ps).

12. The method according to claim 10 or 11, **characterised in that** the method is operated as an interval measuring method and in particular the interval operation occurs in steps c) and/or d).

13. The method according to any one of claims 10 to 12, **characterised in that** the voltage of the energy supply (24) is monitored continuously or in interval operation.

14. The method according to any one of claims 10 to 13, **characterised in that** furthermore in the case of disturbance or interruption of the data transmission in step d), step e) occurs unimpeded.

15. The method according to any one of claims 10 to 14 with a device according to any one of claims 1 to 9, wherein at least one tool is a hydropneumatic adjustment element, in particular a single gas pressure spring or multiple parallel controlled gas pressure springs.

## Revendications

1. Dispositif (1) de traitement et/ou de fabrication en série d'une pièce à usiner (2) avec un boîtier (10) fermé sur la périphérie, dans lequel est agencé au moins un outil (11) pour le traitement et/ou la fabrication de formation de la pièce à usiner (2) d'un premier état à un second état, dans lequel est intégré dans ou à l'outil (2) un moyen de mesure (20), qui est conçu en sorte de contrôler une grandeur de process physique (P1, P2, P3) de l'outil (11) à contrôler lors du traitement ou de la fabrication, dans lequel il est prévu en outre au sein du boîtier (10) fermé sur sa périphérie un émetteur-récepteur (21), qui est conçu pour recevoir du moyen de mesure des données de mesure ainsi que pour émettre sans fil des données de mesure dans un dispositif de réception externe (30) à travers une ouverture de transmission (22) agencée et conçue en fonction de la destination dans le boîtier (10) fermé sur la périphérie.

2. Dispositif (1) selon la revendication 1, **caractérisé en ce que** le boîtier (10) est conçu sous la forme d'un boîtier blindé, de préférence un boîtier métallique.

3. Dispositif (1) selon la revendication 1 ou 2, **caractérisé en ce que** l'ouverture de transmission (22) se présente sous la forme d'une rainure rectangulaire avec une largeur de rainure de 4-15 mm, de préférence de 4-10 mm, tout particulièrement de 5-8 mm et dans lequel la hauteur de la rainure correspond au moins à 6 fois la longueur de la largeur de rainure respective.

4. Dispositif (1) selon l'une quelconque des revendications précédentes, **caractérisé en ce que** plusieurs moyens de mesure (20) se présentent sous la forme d'une partie d'un réseau local personnel (PAN).

5. Dispositif (1) selon l'une quelconque des revendications précédentes, **caractérisé en ce que** le dispositif (1) comprend en outre un outil de compression, d'extrusion, de perforation, de coupe, de projection et/ou de cintrage de métaux et l'outil (11) est conçu comme au moins un composant hydropneumatique autonome.

6. Dispositif (1) selon l'une quelconque des revendications précédentes, **caractérisé en ce que** le dispositif (1) présente en outre une commande de dispositif électronique (40) et une installation de coordination (31) et les moyens de mesure (20) se présentent sous la forme de moyens de mesure (20) paramétrables dans au moins un paramètre réglable, dans lequel l'installation de coordination (31) présente en outre un module de communication (25) pour faire communiquer les moyens de mesure (20) avec la commande de dispositif (40) via l'émetteur-récepteur (21) et en outre un module (32) pour régler et paramétrer les moyens de mesure (20).

7. Dispositif (1) selon l'une quelconque des revendications précédentes, **caractérisé en ce que** les moyens de mesure (20) disposent d'une source d'énergie autonome (24) indépendante du secteur.

8. Dispositif (1) selon l'une quelconque des revendications précédentes, **caractérisé en ce que** les moyens de mesure (20) se présentent sous la forme de moyens de mesure paramétrables dans leur intervalle d'émission (T) pour pouvoir régler l'intervalle d'émission et/ou une durée d'intervalle d'émission souhaitée.

9. Dispositif (1) selon la revendication 8, **caractérisé en ce que** les moyens de mesure (20) présentent en outre un module d'activation et de désactivation qui commande l'activation ou la désactivation et/ou l'émission des données de mesure respectivement déterminées en fonction d'une valeur de seuil réglable (S).

10. Procédé de contrôle de process de valeurs de seuil physiques d'un dispositif (1) selon l'une quelconque des revendications 1-10 avec au moins les étapes suivantes.
a) la définition de valeurs de seuil (Ts, Ps) des grandeurs de process physiques à contrôler d'au moins un outil (11) pour produire un signal de commande lors du dépassement ou de l'infériorité des valeurs de seuil (Ts, Ps) affectées à l'outil (11) ;
b) le paramétrage des moyens de mesure (20) pour contrôler la valeur de consigne en fonction de largeurs de variations de pression-température de l'outil à contrôler (11) conditionnées par le modèle ;
c) le contrôle au moins des grandeurs de process physiques, à savoir la pression de process P et la température T, au moyen des moyens de mesure (20) de l'outil (11) ;
d) la transmission de données sans fil des données de mesure affectées aux grandeurs de process à une installation de coordination (31) au moyen d'un émetteur-récepteur (21) des moyens de mesure correspondants (20),
e) la production d'un signal de commande à partir des données de mesure pour commander l'état de fonctionnement de l'outil (11), dans lequel l'état de fonctionnement de l'outil (11) affecté à la valeur de mesure de la grandeur de process contrôlée est modifié lors du dépassement ou de l'infériorité de la valeur de seuil concernée (Ts, Ps) ou est inactivé.

11. Procédé selon la revendication 10, **caractérisé en ce que** la paramétrisation des moyens de mesure (20) se fait à l'étape b) en sorte qu'une augmentation de la température ΔTₖ au-dessus d'une valeur de seuil définie (Ts) soit détectée dans le temps préalablement à une chute de pression ΔPₖ en dessous de la valeur de seuil (Ps) et qu'il se produise ensuite une production de signal à l'étape e) dans le temps préalablement à une chute de pression en dessous de la valeur de seuil (Ps).

12. Procédé selon la revendication 10 ou 11, **caractérisé en ce que** le procédé opère comme un procédé de mesure d'intervalle et la commande d'intervalle se fait en particulier lors des étapes c) et/ou d).

13. Procédé selon l'une quelconque des revendications 10 à 12, **caractérisé en ce que** la tension de la source d'énergie (24) est contrôlée en continu ou en commande d'intervalle.

14. Procédé selon l'une quelconque des revendications 10 à 13, **caractérisé en ce que**, lors d'une panne ou d'une interruption, la transmission de données à l'étape d) se fait en outre sans problème à l'étape e).

15. Procédé selon l'une quelconque des revendications 10 à 14 avec un dispositif selon l'une quelconque des revendication 1 à 9, dans lequel au moins un outil est un élément de réglage hydropneumatique, en particulier un ou plusieurs ressorts à pression de gaz commandés en parallèle.
